# EUROPEAN PATENT SPECIFICATION

(11) **EP 3 362 620 B1**
(45) Date of publication and mention of the grant of the patent: **11.12.2019**
(21) Application number: 16794392.7
(22) Date of filing: 14.10.2016
(51) Int. Cl.: E04H 17/14, E04H 17/16

(54) **FENCE PANEL**
ZAUNPANEEL
PANNEAU DE CLÔTURE

(30) Priority: 16.10.2015 GB 201518311
(43) Date of publication of application: 22.08.2018
(73) Proprietor: Bernardes, John, Plaistow, London E13 8AL (GB)
(72) Inventor: Bernardes, John, Plaistow, London E13 8AL (GB)
(74) Representative: Dummett Copp LLP
(86) International application number: PCT/GB2016/053202
(87) International publication number: WO 2017/064513

(56) References cited:
- GB-A- 2 269 192
- GB-A- 2 477 303
- JP-A- 2001 020 566

## Description

### BACKGROUND

### a. Field of the Invention

This invention relates to a fence panel and in particular to a fence panel that includes one or more support structures for supporting plants.

### b. Related Art

It is common to erect fence panels along boundaries to provide separation between adjacent areas of land. The fence panels provide screening and may be selected for privacy or decoration or both. Fence panels may be erected, for example around the boundary of a garden.

The average size of gardens is generally decreasing and many people have limited space in their garden for planting. To overcome this problem it is increasingly common for people to use containers and planters, which may be in the form of tiered or stacked containers, to increase the area available for planting. Often containers are planted with seasonal flowers, for example annual bedding plants, or fruit or vegetables.

One problem with traditional containers, however, is that when the seasonal plants have finished flowering or when the fruit or vegetables have been harvested, the containers are often left empty for a period of time. During this time the containers take up valuable space in the garden.

A fence panel including a flower stand for placing a planter is known from JP 2001 020566 A.

It is an object of the present invention to provide a structure suitable for planting that overcomes some of the problems with known plant containers.

### SUMMARY OF THE INVENTION

According to the present invention there is provided a fence panel comprising:
- a frame including a pair of upright frame members and a pair of rails, the rails extending between the upright frame members, and the frame defining a plane of the fence panel;
- a screen attached to the frame; and
- one or more support structures pivotally connected to the frame, an axis of rotation of said pivotal connection being substantially horizontal and said pivotal connection being proximate an edge of the support structure, the or each support structure being rotatable about said pivotal connection between a closed position and an open position, and an angle between the support structure and the plane of the fence panel being greater in the open position than in the closed position; and
- retaining means arranged to limit the angle between the support structure and the plane of the fence panel when the support structure is in the open position,
characterised in that the retaining means comprises a flexible retaining member extending between the support structure and one of the of the frame members and, when the support structure is in the closed position, the flexible retaining member is in a folded configuration and is located between the support structure and the screen and, when the support structure is in the open position, the flexible retaining member is fully extended between the support structure and the frame of the fence panel.

Preferably the or each support structure comprises a substantially planar support panel. In preferred embodiments when the fence panel is erected, the pivotal connection is located proximate a lower edge of the support panel.

In the closed position a plane of the support panel is preferably substantially parallel to the plane of the fence panel.

Preferably the pivotal connection is provided by means of a pivot mechanism including a pivot rod provided on one of the support structure or frame member and an aperture in which said rod is located provided on the other one of the support structure or frame member.

In preferred embodiments at least two upright frame members each extend between a first, lower end and a second, upper end, and the or each support structure is located at a distance from the lower end of said frame members.

A fence panel may include at least two support structures, the support structures being spaced apart along a length of the frame members.

In some embodiments the fence panel may comprise a row of support structures, the row including at least two support structures and the row extending between two upright frame members, wherein at least one additional upright frame member is located between adjacent support structures in said row.

### BRIEF DESCRIPTION OF THE DRAWINGS

The invention will now be further described by way of example only and with reference to the accompanying drawings, in which:
Figure 1 shows (a) a plan view from a first side, (b) an end view and (c) a view from above of a fence panel according to a first preferred embodiment of the present invention, the fence including three support structures and the support structures being in a closed position;
Figure 2 shows (a) a plan view from a first side, (b) an end view and (c) a view from above of the fence panel of Figure 1 with all three support structures in an open position;
Figure 3 is a perspective view from a first side of a fence panel according to a second preferred embodiment of the present invention, the fence including three support structures and a lower one of the three support structures being shown in an open position;
Figure 4 is a vertical cross-sectional view of the fence panel of Figure 3;
Figure 5 is a perspective view from a second side of the fence panel of Figure 3;
Figure 6 is a perspective view from the first side of the fence panel of Figure 3 with all of the three support structures being shown in an open position;
Figure 7 illustrates a frame of the fence panel of Figure 3;
Figure 8 is a perspective view of a support structure of the fence panel of Figure 3;
Figure 9 is a plan view of the support structure of Figure 8;
Figure 10 shows (a) a plan view from a first side, (b) an end view and (c) a view from above of a fence panel according to a third preferred embodiment of the present invention, the fence including nine support structures and the support structures being in a closed position; and
Figure 11 shows (a) a plan view from a first side, (b) an end view and (c) a view from above of the fence panel of Figure 10 with all nine support structures in an open position.

### DETAILED DESCRIPTION

The present invention provides fence panels with integral support structures that may be used to support plants. The fence panels preferably include at least two support structures located vertically above each other so that a user may create at least two tiers or levels of planting.

Importantly, the support structures include support panels that are pivotally or hingedly connected to a part of the fence panel. This enables the support structures to move between an open position and a closed position. In the open position the support panel provides a platform on which plants may be supported. Typically the plants will be growing in a flexible container, such as a grow bag, or in a substantially rigid container, such as a flower pot. In the open position, therefore, the support panel provides a seat or shelf for the flexible or rigid container.

In the closed position the support panel is retained in a substantially vertical orientation. In this position, the support panel acts as a part of a screen of the fence panel.

Accordingly, the support structure may be moved into the open position when a user wishes to support and display plants, but may be returned to the closed position after the plants have finished flowering and have been removed from the support panel.

It will be appreciated that references to vertical and horizontal in this description relate to the orientation of the specified component or assembly when the fence is in use, i.e. when the fence is erected. Furthermore, references to vertical are to be interpreted as encompassing directions that are substantially vertical or upright, and references to horizontal are to be interpreted as encompassing directions that are substantially horizontal or lateral.

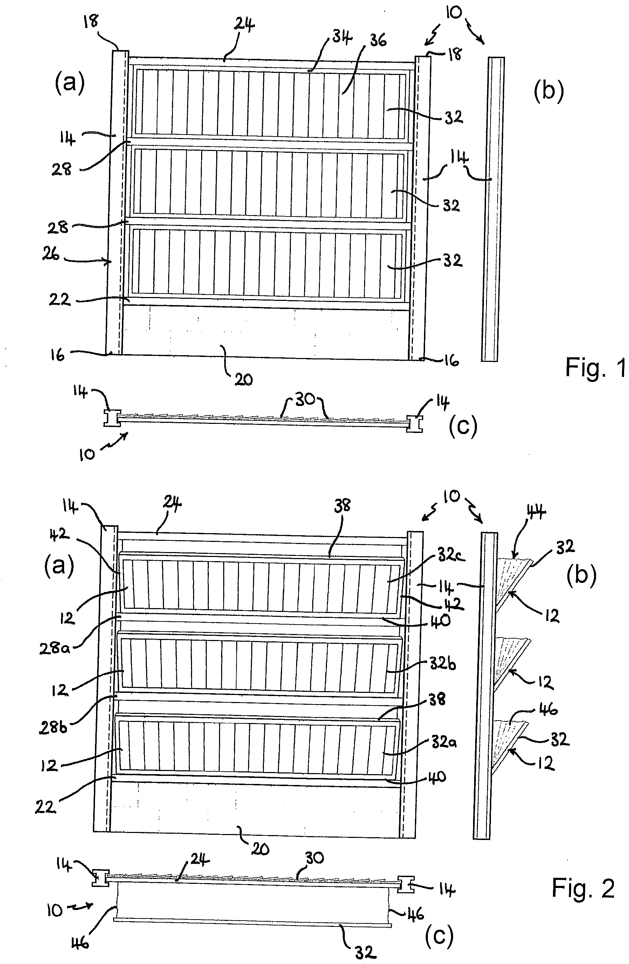

Figures 1 and 2 illustrate a first embodiment of a fence panel 10 according to a preferred embodiment of the present invention. Figure 1 shows the fence panel 10 with a plurality of support structures 12 in a closed position and Figure 2 shows the same fence panel 10 with the support structures 12 in an open position.

The fence panel 10 comprises a pair of vertical or upright frame members or posts 14. The frame members 14 are elongate and extend between a first, lower end 16 and a second, upper end 18. In this embodiment a distance between the frame members 14 defines a width of the fence panel 10 and each of the frame members 14 is configured to be attached to a fence post (not shown) during the construction of a length of fencing.

The fence panel 10 further comprises a base structure or base member 20 that extends between the two upright frame members 14 at the lower end 16 of the frame members 14. The base structure 20 may be of any suitable construction that adds rigidity to the fence panel 10. In this example the base structure 20 comprises a plurality of blocks. A base or bottom rail 22 extends laterally between the upright frame members 14 directly above the base structure 20.

A lateral top rail 24 extends between the upright frame members 14 proximate the upper ends 18 of the frame members 14. The top rail 24, base structure 20 and upright frame members 14 together form a frame 26 of the fence panel 10.

In this example two intermediate rails 28 extend between the upright frame members 14. The intermediate rails 28 are located below the top rail 24 such that the top rail 24 and the intermediate rails 28 all lie in a first vertical plane of the fence panel 10.

The intermediate rails 28 are spaced apart between the base structure 20 and the top rail 24. Each of the intermediate rails 28 extends substantially parallel to the top rail 24, and each of the intermediate rails 28 and top rail 24 extend substantially perpendicularly from the upright frame members 14. As such, a first substantially rectangular opening is defined between the top rail 24 and a first intermediate rail 28a, a second substantially rectangular opening is defined between the first intermediate rail 28a and a second intermediate rail 28b, and a third substantially rectangular opening is defined between the second intermediate rail 28b and the base structure 20 or bottom rail 22.

Each of the rails 22, 24, 28 has a first face and an opposite second face. These first and second faces are vertical faces and define a first side of the fence panel 10 and a second side of the fence panel 10 respectively.

A plurality of fence boards or pickets 30 are attached to the first face of each of the rails 22, 24, 28 to form a screen of the fence panel 10. In this embodiment the fence boards 30 are elongate and extend vertically between the top rail 24 and the base structure 20. It will be appreciated, however, that in other embodiments the fence boards may extend horizontally. Furthermore, neighbouring fence boards may overlap each other as illustrated in Figures 1c and 2c. Alternatively the fence panels may be spaced apart, or they may be connected together by a tongue and groove arrangement, as is known in the art. In yet further embodiments the screen may be in the form of a trellis or lattice panel.

The fence panel 10 further comprises three support structures 12. Each of the support structures 12 comprises a substantially planar support panel 32. The support panel 32 is configured to be similar in appearance to the screen. Accordingly, in this embodiment each support panel 32 includes a perimeter frame 34 and a plurality of slats 36. The support panels 32 are substantially rectangular and have opposite first and second edges 38, 40 and opposite end edges 42.

One of the support panels 32 is located in each of the rectangular openings. In a first, closed position the support panels 32 are oriented such that the first edge 38 of the panel 32 is located above the second edge 40 of the panel 32, i.e. nearer to the upper ends 18 of the upright frame members 14. In this way, each of the first and second edges 38, 40 extends substantially horizontally. Furthermore, in this closed position each of the support panels 32 is co-planar with the intermediate rails 28 and the top rail 24 of the fence panel 10. In other words the support panels 32 lie in the plane of the fence panel 10. In this position the support panels 32 provide a further screen.

In the closed position each of the first and second edges 38, 40 of each of the support panels 32 is located adjacent to a respective rail 22, 24, 28. In particular, the second, lower edge 40 of a lowest support panel 32a is located adjacent the bottom rail 22 and the first, upper edge 38 of the lowest support panel 32a is located adjacent the second intermediate rail 28b, the second, lower edge 40 of a middle support panel 32b is located adjacent the second intermediate rail 28b and the first, upper edge 38 of the middle support panel 32b is located adjacent the first intermediate rail 28a, and the second, lower edge 40 of an upper support panel 32c is located adjacent the first intermediate rail 28a and the first, upper edge 38 of the upper support panel 32c is located adjacent the top rail 24.

Each of the support panels 32 is pivotally connected to the frame 26 of the fence panel 10 and in this embodiment the panels 32 are pivotally connected to the upright frame members 14. The pivotal connection is located proximate the lower, second edge 40 of the support panel 32. The lower edge 40 and therefore the pivotal connection of each support panel 32 is located adjacent a respective rail 22, 24, 28.

Each panel 32 is able to rotate about its pivotal connection, with the axis of rotation being substantially horizontal. Accordingly, the panel 32 can be rotated from the closed position to a second, open position in which the upper, first edge 38 of the panel 32 is further from the plane of the fence panel 10.

In the open position, therefore, there is a larger distance or gap between the upper edge 38 of the support panel 32 and the screen of the fence panel 10 than when the support panel 32 is in the closed position. Furthermore, an angle between the support panel 32 and the plane of the fence panel 10 is greater in the open position than in the closed position.

The support structure 12 further comprises retaining means 44 that are provided at each end edge 42 of the support panel 32. The retaining means 44 limits the angle between the support panel 32 and the plane of the fence panel 10 when the support structure 12 is in the open position. The retaining means 44 comprises a flexible retaining member that extends between each end edge 42 of the support panel 32 and the respective upright frame member 14. In this embodiment the retaining member is in the form of a flexible sheet 46.

When the support panel 32 is in the closed position, the flexible sheet 46 is in a folded configuration and is located between the support panel 32 and the screen. When the support panel 32 is in the open position, the flexible sheet 46 is fully extended between the support panel 32 and the frame 26 of the fence panel 10. Accordingly, the size and shape of the flexible sheet 46 limits the rotation of the support panel 32 about the pivotal connection and determines the open position of the support panel 32. Additionally, when plants or other objects are supported by the support panel 32, the weight of those plants or objects is supported by the pivotal connection and the retaining means 44.

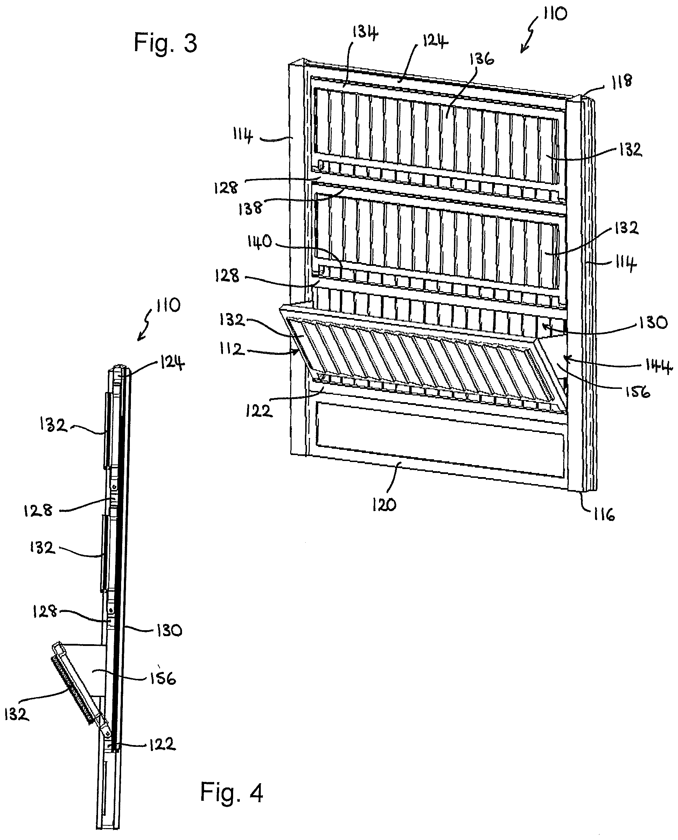

Figures 3 to 9 illustrate a second embodiment of a fence panel 110 according to the present invention. Features of this fence panel 110 are substantially the same as features of the first embodiment of the fence panel 10 and like features have been indicated by reference numbers incremented by 100.

The fence panel 110 comprises a pair of upright frame members or posts 114. The upright frame members 114 are elongate and extend between a first, lower end 116 and a second, upper end 118. A distance between the upright frame members 114 defines a width of the fence panel 110 and each of the upright frame members 114 is configured to be attached to a fence post (not shown) during the construction of a length of fencing.

The fence panel 110 further comprises a base member 120 that extends between the two upright frame members 114 at the lower end 116 of the frame members 114. The base member 120 comprises a board that extends between the upright frame members 114. A bottom rail 122 extends laterally between the upright frame members 114 immediately above the board.

A lateral top rail 124 extends between the upright frame members 114 proximate the upper ends 118 of the frame members 114. The top rail 124, base member 120 and upright frame members 114 together form a frame 126 of the fence panel 110. In this example two intermediate rails 128 extend between the upright frame members 114. The intermediate rails 128 are located below the top rail 124 such that the top rail 124 and the intermediate rails 128 all lie in a first vertical plane of the fence panel 110. A plurality of fence boards or pickets 130 are attached to a first face of each of the rails 122, 124, 128 to form a screen of the fence panel 110.

The fence panel 110 further comprises three support structures 112. Each of the support structures 112 comprises a substantially planar support panel 132. The support panel 132 is configured to be similar in appearance to the screen. Accordingly, in this embodiment each support panel 132 includes a perimeter frame 134 and a plurality of slats 136. The slats 136 overlap each other along adjacent long edges of the slats 136. The support panels 132 are substantially rectangular and have opposite first and second edges 138, 140 and opposite end edges 142.

A support panel 132 is located between adjacent rails 122, 124, 128 of the fence panel 110. In a first, closed position the support panels 132 are oriented such that the first edge 138 of the panel 110 is located above the second edge 140 of the panel 132, i.e. nearer to the upper ends 118 of the frame members 114. In this way, each of the first and second edges 138, 140 extends substantially horizontally. Furthermore, in this closed position each of the support panels 132 is parallel to, or preferably co-planar with, the plane of the fence panel 110 defined by the intermediate rails 128 and the top rail 124. In this position the support panels 132 provide a further screen. An upper one of the support panels 132c is located between the top rail 124 and a first intermediate rail 128a, a middle support panel 132b is located between the first intermediate rail 128a and a second intermediate rail 128b and a lower support panel 132a is located between the second intermediate rail 128b and the bottom rail 122.

Each of the support panels 132 is pivotally connected to the frame 126 of the fence panel 110 and in this embodiment the panels 132 are pivotally connected to the upright frame members 114. The pivotal connection is located proximate the lower, second edge 140 of the support panel 132. Each panel 132 is able to rotate about its pivotal connection, with the axis of rotation being substantially horizontal. Accordingly, the panel 132 can be rotated from the closed position to a second, open position in which the upper, first edge 138 of the panel 132 is further from the plane of the fence panel 110.

In the open position, therefore, there is a larger distance or gap between the upper edge 138 of the support panel 132 and the screen of the fence panel 110 than when the support panel 132 is in the closed position. Furthermore, an angle between the support panel 132 and the plane of the fence panel 110 is greater in the open position than in the closed position.

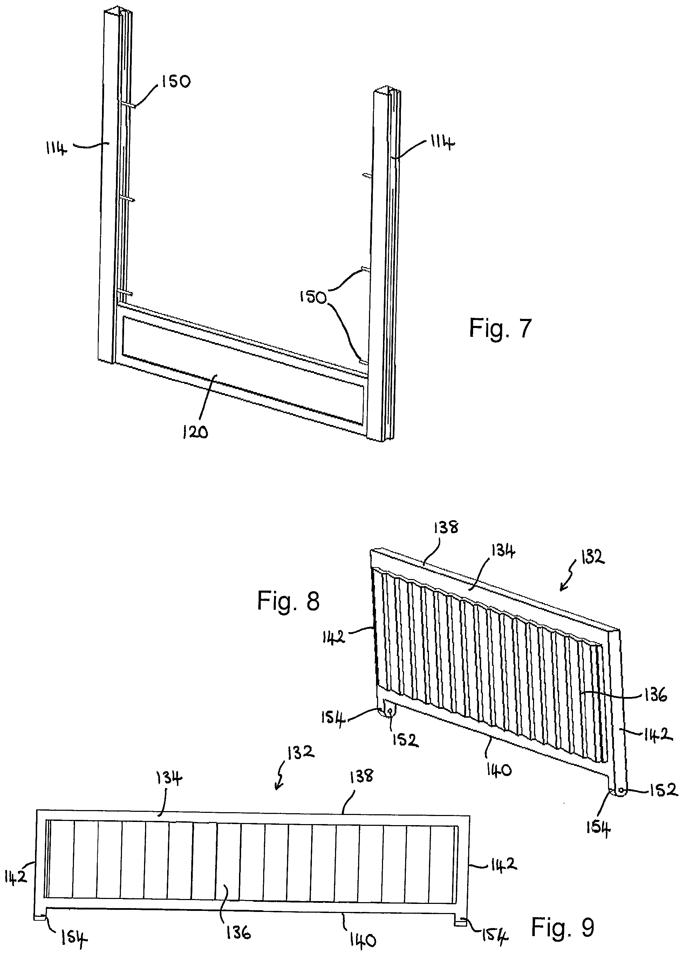

The pivotal connection is formed by a pivot assembly comprising a pivot rod 150 and a corresponding aperture or bore 152 in which the rod 150 is located. The aperture 152 is sized such that the pivot rod 150 can freely rotate in the aperture 152. As shown most clearly in Figures 7 and 8, in this embodiment, a plurality of pivot rods 150 extend from each of the upright frame members 114. The pivot rods 150 extend inwardly from the upright frame members 114. A first set of pivot rods 150 extends from a first one of the upright frame members 114 in a direction towards a second one of the upright frame members 114 and a second set of pivot rods 150 extends from the second one of the upright frame members 114 in a direction towards the first one of the upright frame members 114. Each set of pivot rods comprises three pivot rods 150, corresponding to the number of support panels 132.

Each support board 132 includes two apertures 152 for receiving a corresponding pair of pivot rods 150. The apertures 152 are located proximate the lower edge 140 of the support panel 132 and an axis of each of the apertures 152 extends substantially parallel to the lower edge 140 of the support panel 132. In this embodiment the apertures 140 are provided in a pair of lugs 154 that extend from the lower edge 140 of the support panel 132. The lugs 154 are located at each end of the lower edge 140 and extend from the edge 140 in a direction substantially parallel to the end edges 142.

The pivot rods 150 are spaced apart along the length of each of the upright frame members 114 such that when the support panels 132 are engaged with the rods 150 by insertion of the rods 150 into the respective apertures 152, the support panels 132 are arranged above one another between the upright frame members 114.

Each support structure 112 further comprises retaining means 144 at each end edge 142 of the support panel 132. The retaining means 144 limits the angle between the support panel 132 and the plane of the fence panel 110 when the support structure 112 is in the open position. In this embodiment the retaining means 144 comprises a retaining member in the form of a flexible or foldable strap 156 that extends between each end edge 142 of the support panel 132 and the respective upright frame member 114. In this embodiment the strap 156 does not extend along the full length of the end edge 142 of the support panel 132 to which it is attached.

When the support panel 132 is in the closed position, the strap 156 is located between the support panel 132 and the screen. When the support panel 132 is in the open position, the strap 156 is fully extended between the support panel 132 and the frame 126 of the fence panel 110. Accordingly, a length of the strap 156 limits the rotation of the support panel 132 about the pivotal connection and determines the open position of the support panel 132. Additionally, when plants or other objects are supported by the support panel 132, the weight of those objects is partially supported by the strap 156.

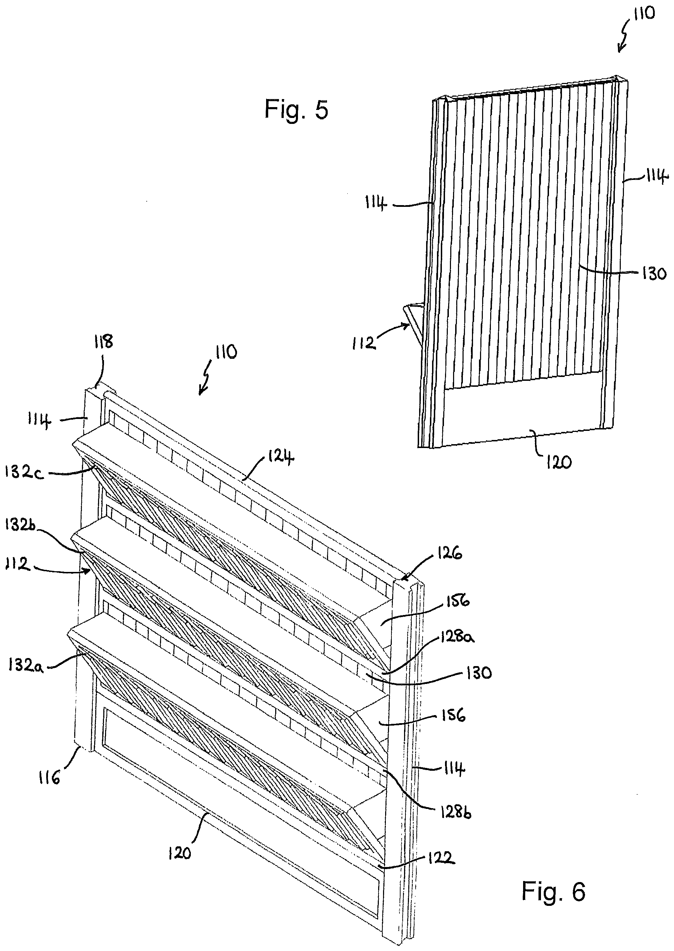

When the support structure 112 is in the open position a volume, designated by crossed lines in Figure 6, is defined between the support panel 132, a part of the screen and the two retaining straps 156. Plants or other objects may be located in this volume and supported by the support panel 132. In this embodiment, for example, three tiers of plants may be supported.

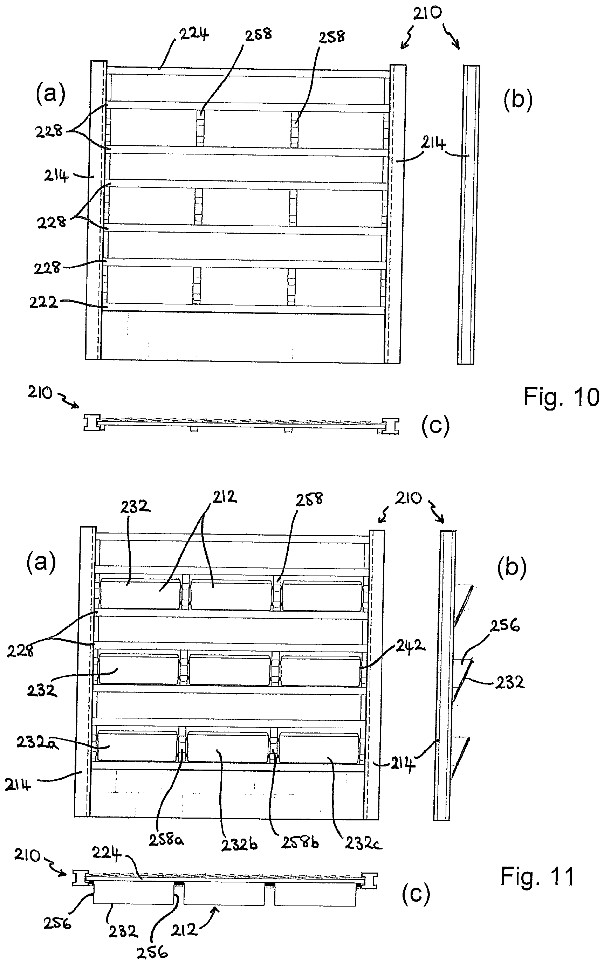

Figures 10 and 11 illustrate a further embodiment of a fence panel 210 according to the present invention. Many of the features of this fence panel 210 are the same as or similar to features of the fence panels 10, 110 of the first and/or second embodiment described above and will not be described in detail in relation to this embodiment.

The fence panel 210 comprises an array of nine support structures 212. The support structures 212 are arranged in three rows of three support structures 212, with each of the rows extending between outermost upright frame members 214. These outermost upright frame members or posts 214 define a width of the fence panel 210. The outermost upright frame members 214 extend for the full height of the fence panel 210 and are configured to be attached to a fence post (not shown) during the construction of a length of fencing.

The fence panel 210 comprises a bottom rail 222 and a top rail 224 and a plurality of intermediate rails 228 located between the top rail 224 and the bottom rail 222. The intermediate rails 228 are spaced apart between the top rail 224 and the bottom rail 222. In preferred embodiments the spacing between adjacent rails 222, 224, 228 is equal. The top rail 224, bottom rail 222 and the intermediate rails 228 all extend between the two outermost upright frame members 214.

A row of support structures 212 is located in an opening bounded by two adjacent rails 222, 224, 228 and a part of the two outermost upright frame members 214. Additional upright frame members or partition members 258 are located between adjacent support structures 212 in each row. Accordingly, in this embodiment two partition members 258 extend between neighbouring rails 222, 228 in each row of three support structures 212. The partition members 258 are preferably located in the same plane as the rails 222, 224, 228 of the fence panel 210.

Each of the support structures 212 comprises a substantially planar support panel 232. Each of the support panels 232 is pivotally connected to the frame 226 of the fence panel 210. In this embodiment the panels 232 are pivotally connected to the upright frame members 214, 258. In particular, in each row a first support panel 232a is pivotally connected to a first one of the outermost upright frame members 214 and a first partition member 258a, a second support panel 232b is pivotally connected to the first partition member 258a and a second partition member 258b, and a third support panel 232c is pivotally connected to the second partition member 258b and a second one of the outermost upright frame members 214.

The pivotal connection may be provided by a pivot rod and corresponding aperture as described above in relation to the second embodiment. Accordingly, pivot rods may extend from each of the outermost upright frame members 214 and each of the partition members 258. In these embodiments, corresponding apertures or bores for receiving the pivot rods are provided in each of the support panels 232 proximate a lower edge 240.

Each support structure 212 further comprises retaining means 244 at each end edge 242 of the support panel 232. The retaining means 244, in the form of a strap 256, extends between the end edge 242 of the support panel 232 and a respective one of the upright frame members 214, 258.

Although in some of the embodiments described the pivotal connection comprises a pivot mechanism including a pivot rod extending from an upright frame member and an aperture provided in a part of the support panel, it will be appreciated that in other embodiments the pivot rod may extend from the support panel and the corresponding aperture may be provided in the frame member. In other embodiments the pivotal connection may be provided by any other pivot mechanism that permits the support panel to rotate an axis substantially parallel to a lower edge of the support panel as described above.

Although in the above embodiments the retaining member has been in the form of a flexible sheet or a flexible strap, it will be appreciated that the flexible retaining member may be of any suitable type. For example, the retaining member may be in the form of a chain or cord. In other embodiments the retaining means may further comprise a stop surface or an abutment surface provided on a part of the fence panel that is arranged to limit the rotation of the support panel.

The present invention therefore provides a fence panel that includes support structures suitable for supporting plants in a multi tiered arrangement.

## Claims

1. A fence panel (10, 110, 210) comprising:
- a frame including a pair of upright frame members (14, 114, 214) and a pair of rails (22, 24, 122, 124, 222, 224), the rails extending between the upright frame members (14, 114, 214), and the frame defining a plane of the fence panel;
- a screen attached to the frame;
- one or more support structures (12, 112, 212) pivotally connected to the frame, an axis of rotation of said pivotal connection being substantially horizontal and said pivotal connection being proximate an edge of the support structure, the or each support structure (12, 112, 212) being rotatable about said pivotal connection between a closed position and an open position, and an angle between the support structure (12, 112, 212) and the plane of the fence panel (10, 110, 210) being greater in the open position than in the closed position;and
- retaining means (44, 144, 244) arranged to limit the angle between the support structure (12, 112, 212) and the plane of the fence panel (10, 110, 210) when the support structure is in the open position,
**characterised in that** the retaining means (44, 144, 214) comprises a flexible retaining member (46, 156, 256) extending between the support structure (12, 112, 212) and one of the of the frame members (14, 114, 214) and, when the support structure (12, 112, 212) is in the closed position, the flexible retaining member (46, 156, 256) is in a folded configuration and is located between the support structure (12, 112, 212) and the screen and, when the support structure (12, 112, 212) is in the open position, the flexible retaining member (46, 156, 256) is fully extended between the support structure (12, 112, 212) and the frame of the fence panel (10, 110, 210).

2. A fence panel (10, 110, 210) as claimed in Claim 1, wherein the or each support structure (12, 112, 212) comprises a substantially planar support panel (32, 132, 232).

3. A fence panel (10, 110, 210) as claimed in Claim 2, wherein when the fence panel is erected, the pivotal connection is located proximate a lower edge (40, 140, 240) of the support panel (32, 132, 232).

4. A fence panel (10, 110, 210) as claimed in Claim 2 or Claim 3, wherein in the closed position a plane of the support panel (32, 132, 232) is substantially parallel to the plane of the fence panel.

5. A fence panel (10, 110, 210) as claimed in any preceding claim, wherein the flexible retaining member is in the form of a flexible sheet (46) or strap (156, 256).

6. A fence panel as claimed in any one of Claims 1 to 4, wherein the flexible retaining member is in the form of a chain or cord.

7. A fence panel (110) as claimed in any preceding claim, wherein the pivotal connection is provided by means of a pivot mechanism including a pivot rod (150) provided on one of the support structure (112) or frame member (114) and an aperture (152) in which said rod is located provided on the other one of the support structure (112) or frame member (114).

8. A fence panel (10, 110) as claimed in any preceding claim, wherein at least two upright frame members (14, 114) each extend between a first, lower end (16, 116) and a second, upper end (18, 118), and the or each support structure (12, 112) is located at a distance from the lower end (16, 116) of said frame members (14, 114).

9. A fence panel (10, 110, 210) as claimed in any preceding claim, including at least two support structures (12, 112, 212), the support structures being spaced apart along a length of the frame members (14, 114, 214).

10. A fence panel (210) as claimed in any preceding claim, comprising a row of support structures (212), the row including at least two support structures (212) and the row extending between two upright frame members (214), wherein at least one additional upright frame member (258) is located between adjacent support structures (212) in said row.

## Patentansprüche

1. Zaunpaneel (10, 110, 210) umfassend:
- einen Rahmen, der ein Paar aufrechte Rahmenelemente (14, 114, 214) und ein Paar Schienen (22, 24, 122, 124, 222, 224) aufweist, wobei die Schienen sich zwischen den aufrechten Rahmenteilen (14, 114, 214) erstrecken, und wobei der Rahmen eine Ebene des Zaunpaneels definiert;
- ein an dem Rahmen angebrachtes Zaunelement;
- eine oder eine Mehrzahl Stützstrukturen (12, 112, 212), die schwenkbar mit dem Rahmen verbunden sind, wobei eine Drehachse der Schwenkverbindung im Wesentlichen horizontal verläuft und die Schwenkverbindung benachbart zu einem Rand der Stützstruktur liegt, wobei die oder jede Stützstruktur (12, 112, 212) um die Schwenkverbindung zwischen einer geschlossenen Position und einer offenen Position gedreht werden kann, und wobei ein Winkel zwischen der Stützstruktur (12, 112, 212) und der Ebene des Zaunpaneels (10, 110, 210) in der offenen Position größer ist als in der geschlossenen Position; und
- ein Haltemittel (44, 144, 244), welches dazu eingerichtet ist, den Winkel zwischen der Stützstruktur (12, 112, 212) und der Ebene des Zaunpaneels (10, 110, 210) zu begrenzen, wenn sich die Stützstruktur in der offenen Position befindet,
**dadurch gekennzeichnet,**
**dass** das Haltemittel (44, 144, **244)** ein flexibles Halteelement (46, 156, 256) umfasst, welches sich zwischen der Stützstruktur (12, 112, 212) und einem der Rahmenelemente (14, 114, 214) erstreckt und dadurch, dass wenn die Stützstruktur (12, 112, 212) sich in der geschlossenen Position befindet, das flexible Haltemittel (46, 156, 256) sich in einer gefalteten Konfiguration befindet und zwischen der Stützstruktur (12, 112, 212) und dem Zaunelement angeordnet ist, und dadurch, dass wenn sich die Stützstruktur (12, 112, 212) in der geöffneten Position befindet, das flexible Halteelement (46, 156, 256) vollständig zwischen der Stützstruktur (12, 112, 212) und dem Rahmen des Zaunpaneels (10, 110, 210) ausgestreckt ist.

2. Zaunpaneel (10, 110, 210) nach Anspruch 1,
bei welchem die oder jede Stützstruktur (12, 112, 212) ein im Wesentlichen ebenes Stützpaneel (32, 132, 232) umfasst.

3. Zaunpaneel (10, 110, 210) nach Anspruch 2,
bei welchem die Schwenkverbindung sich benachbart zu einem unteren Rand (40, 140, 240) des Stützpaneels (32, 132, 232) befindet, wenn das Zaunpaneel aufgerichtet ist.

4. Zaunpaneel (10, 110, 210) nach Anspruch 2 oder Anspruch 3,
bei welchem in der geschlossenen Position eine Ebene des Stützpaneels (32, 132, 232) im Wesentlichen parallel zur Ebene des Zaunpaneels liegt.

5. Zaunpaneel (10, 110, 210) nach einem der vorigen Ansprüche,
bei welchem das flexible Halteelement in Form eines flexiblen Flächenelements (46) oder Gurtes (156, 256) vorliegt.

6. Zaunpaneel nach einem der Ansprüche 1 - 4,
bei welchem das flexible Halteelement in Form einer Kette oder Schnur vorliegt.

7. Zaunpaneel (110) nach einem der vorigen Ansprüche,
bei welchem die Schwenkverbindung mittels eines Schwenkmechanismus bereitgestellt ist, welcher eine Schwenkstange (150), die entweder an der Stützstruktur (112) oder dem Rahmenelement (114) vorgesehen ist, sowie eine Öffnung (152) beinhaltet, in welcher die Stange angeordnet werden kann und welche entsprechend an dem Rahmenelement (114) oder der Stützstruktur (112) angeordnet ist.

8. Zaunpaneel (10, 110) nach einem der vorigen Ansprüche,
bei welchem sich wenigstens zwei aufrechte Rahmenelemente (14, 114) jeweils zwischen einem ersten, unteren Ende (16, 116) und einem zweiten, oberen Ende (18, 118) erstrecken, und wobei die oder jede Stützstruktur (12, 112) sich in einem Abstand von dem unteren Ende (16, 116) der Rahmenelemente (14, 114) befindet.

9. Zaunpaneel (10, 110, 210) nach einem der vorigen Ansprüche,
welches wenigstens zwei Stützstrukturen (12, 112, 212) aufweist, wobei die Stützstrukturen voneinander entlang einer Längserstreckung der Rahmenelemente (14, 114, 214) beabstandet sind.

10. Zaunpaneel (210) nach einem der vorigen Ansprüche, welches eine Reihe von Stützstrukturen (212) umfasst, wobei die Reihe wenigstens zwei Stützstrukturen (212) aufweist und die Reihe sich zwischen zwei aufrechten Rahmenelementen (214) erstreckt, wobei wenigstens ein zusätzliches aufrechtes Rahmenelement (258) zwischen benachbarten Stützstrukturen (212) in dieser Reihe angeordnet ist.

## Revendications

1. Panneau de clôture (10, 110, 210) comprenant :
- un cadre comprenant une paire d'éléments de cadre verticaux (14, 114, 214) et une paire de rails (22, 24, 122, 124, 222, 224), les rails s'étendant entre les éléments de cadre verticaux (14, 114, 214), et le cadre définissant un plan du panneau de clôture ;
- un écran fixé au cadre ;
- une ou plusieurs structures de support (12, 112, 212) reliés de manière pivotante au cadre, un axe de rotation de ladite liaison pivotante étant sensiblement horizontal et ladite liaison pivotante se trouvant à proximité d'un bord de la structure de support, la ou chaque structure de support (12, 112, 212) étant apte à tourner autour de ladite liaison pivotante entre une position fermée et une position ouverte, et un angle entre la structure de support (12, 112, 212) et le plan du panneau de clôture (10, 110, 210) étant plus grand dans la position ouverte que dans la position fermée ; et
- des moyens de retenue (44, 144, 244) agencés pour limiter l'angle entre la structure de support (12, 112, 212) et le plan du panneau de clôture (10, 110, 210) lorsque la structure de support est dans la position ouverte,
**caractérisé par le fait que** les moyens de retenue (44, 144, 244) comprennent un élément de retenue souple (46, 156, 256) s'étendant entre la structure de support (12, 112, 212) et l'un des éléments de cadre (14, 114, 214) et, lorsque la structure de support (12, 112, 212) est dans la position fermée, l'élément de retenue souple (46, 156, 256) est dans une configuration pliée et est situé entre la structure de support (12, 112, 212) et l'écran et, lorsque la structure de support (12, 112, 212) est dans la position ouverte, l'élément de retenue souple (46, 156, 256) est entièrement étendu entre la structure de support (12, 112, 212) et le cadre du panneau de clôture (10, 110 210).

2. Panneau de clôture (10, 110, 210) selon la revendication 1, dans lequel la ou chaque structure de support (12, 112, 212) comprend un panneau de support sensiblement plan (32, 132, 232).

3. Panneau de clôture (10, 110, 210) selon la revendication 2, dans lequel, lorsque le panneau de clôture est dressé, la liaison pivotante se situe à proximité d'un bord inférieur (40, 140, 240) du panneau de support (32, 132, 232).

4. Panneau de clôture (10, 110, 210) selon la revendication 2 ou la revendication 3, dans lequel, dans la position fermée, un plan du panneau de support (32, 132, 232) est sensiblement parallèle au plan du panneau de clôture.

5. Panneau de clôture (10, 110, 210) selon l'une quelconque des revendications précédentes, dans lequel l'élément de retenue souple se présente sous la forme d'une feuille souple (46) ou d'une sangle (156, 256).

6. Panneau de clôture selon l'une quelconque des revendications 1 à 4, dans lequel l'élément de retenue souple se présente sous la forme d'une chaîne ou d'un cordon.

7. Panneau de clôture (110) selon l'une quelconque des revendications précédentes, dans lequel la liaison pivotante est réalisée au moyen d'un mécanisme de pivot comprenant une tige de pivot (150) prévue sur l'un parmi la structure de support (112) ou l'élément de cadre (114) et une ouverture (152) dans laquelle ladite tige se situe, prévu sur l'autre parmi la structure de support (112) ou l'élément de cadre (114).

8. Panneau de clôture (10, 110) selon l'une quelconque des revendications précédentes, dans lequel au moins deux éléments de cadre verticaux (14, 114) s'étendent chacun entre une première extrémité inférieure (16, 116) et une seconde extrémité supérieure (18, 118), et la ou chaque structure de support (12, 112) se situe à une distance de l'extrémité inférieure (16, 116) desdits éléments de cadre (14, 114).

9. Panneau de clôture (10, 110, 210) selon l'une quelconque des revendications précédentes, comprenant au moins deux structures de support (12, 112, 212), les structures de support étant espacées le long d'une longueur des éléments de cadre (14, 114, 214).

10. Panneau de clôture (210) selon l'une quelconque des revendications précédentes, comprenant une rangée de structures de support (212), la rangée comprenant au moins deux structures de support (212) et la rangée s'étendant entre deux éléments de cadre verticaux (214), au moins un élément de cadre vertical supplémentaire (258) se situant entre des structures de support adjacentes (212) dans ladite rangée.
